# EUROPEAN PATENT APPLICATION

(11) **EP 0 539 602 A1**
(43) Date of publication of application: **05.05.1993**
(21) Application number: 92909987.7
(22) Date of filing: 11.05.1992
(51) Int. Cl.: G01D 5/244, G01D 5/16, G01D 5/245, G01P 3/488

(54) **MAGNETORESISTANCE TYPE REVOLUTION DETECTOR**

(30) Priority: 10.05.1991 JP 105806/91
(71) Applicant: FANUC LTD., Minamitsuru-gun, Yamanashi 401-05 (JP)
(72) Inventor: NAKAMURA, Kosei, Fanuc Dai-3 Vira-karamatsu, Yamanashi 401-05 (JP); KATSUZAWA, Yukio, 1915-5, Funatsu, Yamanashi 401-03 (JP); TUKUOKA, Hiroshi, Fanuc Mansion Harimomi 7-110, Yamanashi 401-05 (JP)
(74) Representative: Otte, Peter, Dipl.-Ing.
(86) International application number: JP9200596
(87) International publication number: WO9221003

(57) **Abstract**

This invention is directed to reduce a production cost of a revolution detector by providing an integrally sintered rotor of a magnetoresistance type revolution detector. The magnetoresistance type revolution detector (10) includes a rotor (12) equipped with an angular position detection plane (26) at an upper stage and a rotational speed detection plane (22) at a lower stage; permanent magnets (14, 16) so fixed as to oppose the respective detection planes of the rotor; and pairs (18) and (20) of magnetoresistance devices disposed between the rotor (12) and the magnet (14) and between the rotor (12) and the magnet (16), respectively. The rotation speed detection plane (22) of the rotor (12) is equipped with teeth (24) having a dimension of a predetermined gear. On the other hand, the angular position detection plane (26) is equipped with one tooth (28) having the same phase and the same tooth shape as those of one of the teeth (24). Accordingly, the rotor (12) can be molded and sintered integrally. Moreover, interference of magnetic fluxes does not occur between the speed detection side and the position detection side, and an accurate signal can be obtained.

## Description

### TECHNICAL FIELD

The present invention relates to a magneto-resistive revolution detector. In particular, the present invention relates to an improvement of a magneto-resistive revolution detector, comprising a rotor mounted on and rotatable with a revolution body for detecting rotational speed of the body and rotational position thereof in relation to a predetermined base point, and having two different circumferential surfaces each provided with a tooth or a groove, one of which is a rotational speed detecting surface and the other being a rotational position detecting surface; magnets arranged opposite to the rotational speed detecting surface and the rotational position detecting surface respectively, for forming a magnetic field between the magnets and each detecting surface; and signal generating magneto-resistive type circuit elements arranged between the rotational speed detecting surface and the rotational position detecting surface of the rotor and the magnets for forming a magnetic fluid and generating a rotational speed detecting signal and a rotational position detecting signal.

### BACKGROUND ART

This kind of magneto-resistive revolution detector is used for detecting rotational speed and rotational position of various rotation shafts, such as the spindle of a machine tool, or an output shaft of a motor, for controlling the speed and the position of the rotation or output shaft. In operation, the magneto-resistive revolution detector outputs a voltage signal that alters correspondingly to an angular displacement of the rotational body about an axis of rotation, and detects the rotational speed and the rotational position by processing the voltage signal. Further, the magneto-resistive revolution detector generally uses a magneto-resistive element as a signal generating circuit element for outputting the voltage signal. The magneto-resistive element is disposed perpendicular to the magnetic field formed between the rotor and the magnets fixedly arranged around the rotor, and, when the magnetic field changes in proportion to the revolution of the rotor, alters the electric resistant value following this change and thus alters the output voltage thereof.

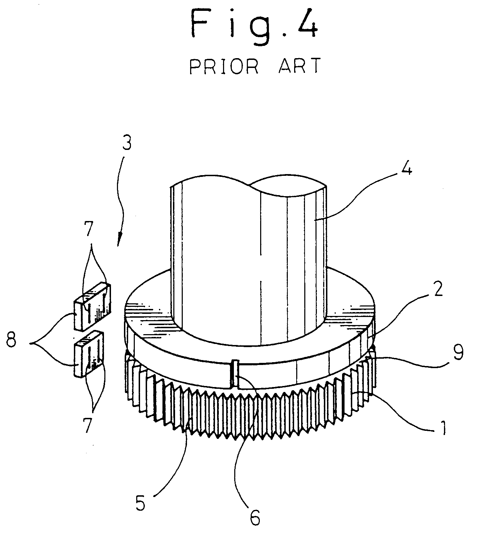

Figure 4 shows an example of a conventional magneto-resistive revolution detector. Referring to Fig. 4, the magneto-resistive revolution detector includes a first annular rotor 1 formed in a gear-shape having a plurality of teeth on a circumferential surface, a second annular rotor 2 having inner and outer diameters identical to those of the first rotor 1 and a groove on one position in the circumferential surface, and a pair of magnetic sensors 3 disposed opposite to each of the circumferential surfaces of the rotors 1, 2. The first and the second rotors 1, 2 are fixed on an operating shaft 4 in a coaxial superimposed manner. Teeth 5 of the first rotor 1 are formed so as to have a length extending in an axial direction and at a predetermined pitch in a circumferential direction, and a groove 6 of the second rotor 2 is formed so as to extend parallel to the length of the teeth 5 and have a width and a depth larger than the pitch and the height of the teeth 5. A magnetic sensor 3 has two magneto-resistive elements 7 mutually connected in series and a permanent magnet 8 arranged behind the elements, and each magneto-resistive element 7 acts as a signal generating circuit element that generates the detection signal of the rotational speed or the rotational position. When each rotor 1, 2 rotates, the displacement of the teeth 5 and the groove 6 vary the distance between the permanent magnet 8 of each magnetic sensor 3 and each rotor 1, 2 so as to increase or decrease magnetic flux, and thereby the resistance of each magneto-resistive element 7 varies so as to alter the output voltage in waves. The rotational position is detected by processing the output voltage given in this manner, and at the same time, the rotational speed is detected by a predetermined calculating process. The groove 6 of the second rotor 2 is prepared so as to define the positional base point in one revolution, and thus one pulse voltage signal is output per revolution from the magnetic sensor 3 arranged opposite to the second rotor 2.

In the revolution detector described above, the first and the second rotors 1, 2 are generally independent members that are molded and precisely processed using individual processes. Conventionally, the gear-shaped first rotor 1 is precisely processed by grinding after being roughly formed from iron powder by sintering, and, on the other hand, the second rotor 2 is formed by a machining process. These individually formed rotors 1, 2 are firmly fixed on the operating shaft 4 by such a method as, e.g., interference fitting. In this respect, when one of the teeth 5 of the first rotor 1 and the groove 6 of the second rotor 2 are axially aligned, the magnetic flux for each rotor interferes with each other, and thus the waveform of the output voltage of each magnetic sensor 3 is disturbed. Therefore, it is necessary to form an annular space 9 between the first rotor 1 and the second rotor 2 to prevent mutual flux interference.

As described above, the conventional magneto-resistive revolution detector has problems in that the number of manufacturing steps and manufacturing costs increase because the first rotor 1 and the second rotor 2 are formed independently. However, in the case where the rotors 1, 2 are integrally molded by, e.g., a sintering process, in view of the sintering mold, it is difficult to form the annular space 9 and prevent flux interference, and thus it is difficult to integrally form the rotor.

### DISCLOSURE OF THE INVENTION

The object of the present invention is to provide a magneto-resistive revolution detector that comprises a double layer rotor capable of an integral mold by sintering; the rotor having no mutual magnetic flux interference between a position detection side and a speed detection side, thus ensuring an accurate waveform of output voltage, and thereby enabling reduction in costs by decreasing the number of processes and ensuring quality stabilization.

To accomplish the above object, the present invention provides a magneto-resistive revolution detector for detecting a rotational speed of a revolution body and a rotational position thereof relating to a predetermined base point, which comprises a rotor mounted on and rotatable with a revolution body to be detected, the rotor being an integrally molded element formed by sintering a magnetic material and having two coaxial circumferential surfaces with different surface shapes, and one of the circumferential surfaces forming a rotational speed detecting surface having a plurality of teeth with predetermined tooth-dimensions and the other forming a rotational position detecting surface having one tooth with the same tooth-dimensions in the same phase as those of one of the teeth; magnets fixedly arranged opposite to the rotational speed detecting surface and the rotational position detecting surface of the rotor, respectively, so as to form a variable magnetic field between the magnets and the rotor; and signal generating magneto-resistive type circuit elements arranged between the rotor and each of the magnets so as to generate a rotational speed detecting signal and a rotational position detecting signal corresponding to a variation of the magnetic field following a revolution of the rotor.

When the teeth on the rotational speed detecting surface are displaced angularly following the revolution of the rotor, the distance between the rotational speed detecting surface and the magnet arranged fixedly continuously changes, and thus the magnetic field by the magnet varies continuously, and the signal generating magneto-resistive type circuit element arranged opposite to the rotational speed detecting surface outputs an output voltage signal with a waveform varying corresponding to a variation in the magnetic field. In the same way, the signal generating magneto-resistive type circuit element arranged opposite to the rotational position detecting surface outputs one pulse output voltage signal per revolution, and this signal is used as an origin of a position when processing the detected signal. In this respect, because the tooth on the rotational position detecting surface has the same phase and the same tooth-dimensions as those of one of the teeth on the rotational speed detecting surface, mutual interference between the position detection side and the speed detection side does not occur, and thus disturbance of the waveform caused by interference of the magnetic field is prevented in each of the output signals. Therefore, it becomes unnecessary to form an annular space between the rotational speed detecting surface and the rotational position detecting surface and it becomes possible to integrally mold the rotor by sintering, thereby lowering the manufacturing costs by reducing the number of processes and the quality of the product can be stabilized.

According to the preferred embodiment of the present invention, each of the signal generating magneto-resistive type circuit elements comprises a pair of magneto-resistive elements. In this case, by taking into account that the output voltage varies somewhat in temperature because of the large resistant temperature coefficient of the magneto-resistive elements, the pair of magneto-resistive elements arranged opposite to the rotational speed detecting surface of the rotor are preferably disposed parallel to each other and connected in series in such a manner that they are spaced in a circumferential direction a distance of half a pitch of the teeth on the rotational speed detecting surface, and the pair of magneto-resistive elements arranged opposite to the rotational position detecting surface of the rotor are preferably disposed parallel to each other and connected in series in such a manner that they are spaced in a circumferential direction a distance equal to the pitch of the teeth on the rotational speed detecting surface. In this way, a period of a voltage signal (i.e. an origin signal) obtained from the rotational position detecting surface is enlarged more than a period of a voltage signal obtained from the rotational speed detecting surface, and thereby one origin signal per revolution can be accurately and assuredly obtained.

The rotor may be an annular element having a cylindrical hole at a center thereof for mounting the rotor on the revolution body, and the rotational speed detecting surface and the rotational position detecting surface of the rotor may be formed coaxially to the cylindrical hole.

### BRIEF DESCRIPTION OF THE DRAWINGS

The foregoing and other objects, features, and advantages of the present invention will be described with relation to the embodiments shown in the accompanying drawings, in which;
Fig. 1 is a schematic perspective view of a magneto-resistive revolution detector according to an embodiment of the present invention;
Fig. 2 is a partially enlarged view of the revolution detector of Fig. 1;
Fig. 3a shows an output voltage of a first magnetic sensor on a speed detection side in the case where, in the revolution detector of Fig. 1, magneto-resistive elements are spaced a distance of half a pitch of teeth on a rotational speed detecting surface;
Fig. 3b shows an output voltage of a second magnetic sensor on a position detection side in the case where, in the revolution detector of Fig. 1, magneto-resistive elements are spaced a distance of one pitch of teeth on a rotational speed detecting surface;
Fig. 3c shows an output voltage of a second magnetic sensor on a position detection side in the case where, in the revolution detector of Fig. 1, magneto-resistive elements are spaced a distance of half a pitch of teeth on a rotational speed detecting surface; and
Fig. 4 is a schematic perspective view of a conventional magneto-resistive revolution detector.

### BEST MODE OF CARRYING OUT THE INVENTION

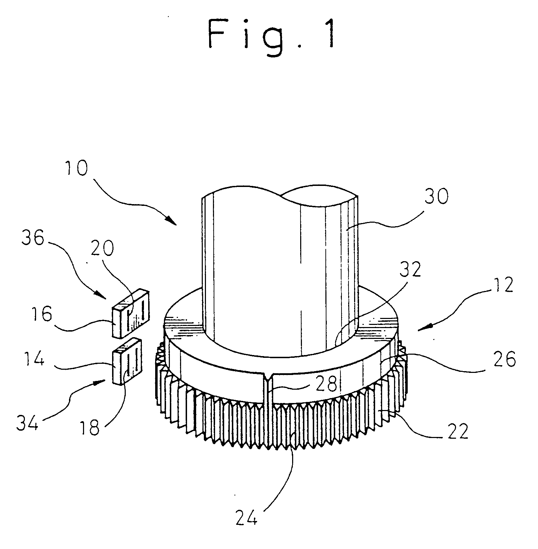

Referring to Fig. 1, a magneto-resistive revolution detector 10 according to an embodiment of the present invention includes an annular rotor 12 having two coaxial and different circumferential surfaces on upper and lower sides, permanent magnets 14 and 16 fixedly arranged opposite to each of the circumferential surfaces of the rotor 12, respectively, and two pairs of magneto-resistive elements 18 and 20 arranged between the rotor 12 and each of the permanent magnets 14 and 16.

The rotor 12 is made of a magnetic material. The circumferential surface 22 on the lower side of the rotor 12 is provided with a plurality of teeth 24 having predetermined tooth-dimensions and forms a rotational speed detecting surface 22. The circumferential surface 26 on the upper side of the rotor 12 is provided with one tooth 28 having the same tooth-dimensions in the same phase as those of one of the teeth 24 and forms a rotational position detecting surface 26. The rotor 12 has a cylindrical hole 32 at the center thereof for fixing the rotor 12 to an operational shaft 30 as a revolution body to be detected. The rotational speed detecting surface 22 and the rotational position detecting surface 26 are formed coaxially to the cylindrical hole 32.

Due to the above-mentioned construction, the rotor 12 of the magneto-resistive revolution detector 10 can be manufactured as an integrally molded article by molding and sintering a magnetic metal powder material, such as iron powder. That is, the annular space 9 between the first and the second rotors in the conventional detector (see Fig. 4) is eliminated, and the tooth 28 and 24 provided on the upper rotational position detecting surface 26 and the lower rotational speed detecting surface 22 of the rotor 12, respectively, are constructed to have the same tooth-dimensions in the same phase as each other, thereby making it possible to pull out of a cast after sintering.

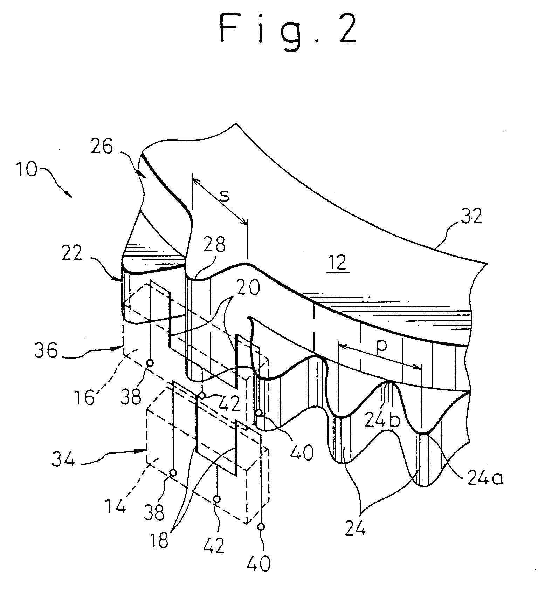

As shown in Figs. 1 and 2, permanent magnets 14 and 16 and magneto-resistive elements 18 and 20 are arranged opposite to the lower rotational speed detecting surface 22 and the upper rotational position detecting surface 26 of the rotor 12, respectively. For the sake of description, the permanent magnet 14 and the magneto-resistive elements 18 both arranged opposite to the rotational speed detecting surface 22 are referred to as a first magnetic sensor 34, and the permanent magnet 16 and the magneto-resistive elements 20 both arranged opposite to the rotational position detecting surface 26 are referred to as a second magnetic sensor 36. The first and the second magnetic sensors 34 and 36 output a signal for detecting the rotational speed and the rotational position of the operational shaft 30, respectively, corresponding to the revolution of the rotor 12. Each pair of magneto-resistive elements 18 and 20 of the first and the second magnetic sensors 34 and 36 are signal generating magneto-resistive type circuit elements for generating a rotational speed signal and a rotational position signal, respectively, and are arranged between the permanent magnet 14 and the rotational speed detecting surface 22 and between the permanent magnet 16 and the rotational position detecting surface 26, respectively, as shown in Fig. 2. The permanent magnet 14 forms a magnetic field between same and the rotational speed detecting surface 22 of the rotor 12 and the permanent magnet 16 forms a magnetic field between same and the rotational position detecting surface 26 of the rotor 12, and each pair of magneto-resistive elements 18 and 20 extend in a vertical direction perpendicular to the magnetic fields and are connected in series and spaced parallel to each other in a circumferential direction.

Each pair of magneto-resistive elements 18, 20 of the first and the second magnetic sensors 34, 36 are applied with a constant voltage between a Vᵢₙ terminal 38 and a GND terminal 40 arranged at each end of a circuit. When the rotor 12 rotates in this condition, the teeth 24 of the lower rotational speed detecting surface 22 and the tooth 28 of the upper rotational position detecting surface 26 are displaced simultaneously, and thus the electrical resistance value of each magneto-resistive element 18, 20 varies. Therefore, the electric potential of a Vₒᵤₜ terminal 42 arranged at a center position of a series connection of the magneto-resistive elements 18, 20 varies, and a voltage signal having a waveform of a predetermined amplitude and period varying corresponding to the revolution of the rotor 12 is output from the Vₒᵤₜ terminal 42. As mentioned before, one of the teeth 24 of the rotational speed detecting surface 22 and the tooth 28 of the rotational position detecting surface 26 of the rotor 12 have the same tooth-dimensions in the same phase, thereby ensuring that, when the voltage signal is output, an accurate output waveform can be obtained without magnetic flux interference.

As shown in Fig. 2, in the above-mentioned magneto-resistive revolution detector 10, the first magnetic sensor 34 arranged opposite to the rotational speed detecting surface 22 of the rotor 12 includes a pair of magneto-resistive elements 18 spaced from each other a distance of half a pitch p of the teeth 24 on the rotational speed detecting surface 22. Therefore, when one of the magneto-resistive elements 18 is positioned at the front of an addendum 24a of one of the teeth 24 and the other is positioned at the front of a dedendum 24b thereof, the difference between the intensity of the magnetic field affecting each of the magneto-resistive elements 18 becomes largest in the case of any other arrangement, and thus the difference between the resistance value of each of the magneto-resistive elements 18 becomes largest. Therefore, the output voltage waveform with the largest amplitude is obtained from the first magnetic sensor 34. On the other hand, the second magnetic sensor 36 arranged opposite to the rotational position detecting surface 26 of the rotor 12 includes a pair of magneto-resistive elements 20 spaced from each other a distance equal to the pitch p of the teeth 24 on the rotational speed detecting surface 22. This distance is equal to the thickness S of a dedendum of the tooth 28 on the rotational position detecting surface 26. Therefore, both magneto-resistive elements 20 are not simultaneously opposed to the tooth 28, and thus a pulse waveform, wherein one signal length is longest in the case of any other arrangement, is obtained from the second magnetic element 36.

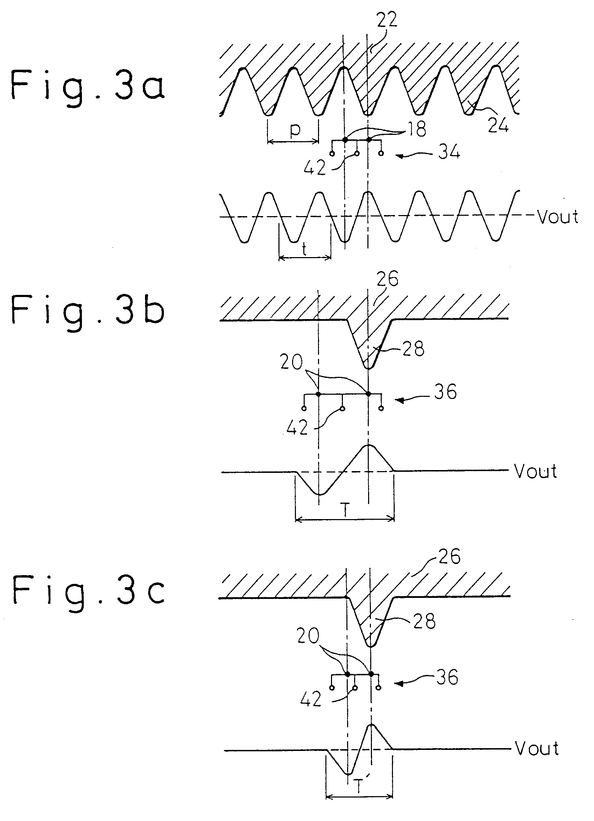

Figs. 3a to 3c show output voltage waveforms obtained from the first and the second magnetic sensors 34 and 36 arranged opposite to the rotational speed detecting surface 22 and the rotational position detecting surface 26 of the rotor 12, respectively.

Fig. 3a shows an output voltage of the first magnetic sensor 34 of which the magneto-resistive elements 18 are arranged in the space of 1/2 p, and Fig. 3b shows an output voltage of the second magnetic sensor 36 of which the magneto-resistive elements 20 are arranged in the space of 1p. As shown in the figures, the period T of the waveform (the length of one signal) shown in Fig. 3b is two times the period t of the waveform shown in Fig. 3a. The object of the enlargement of the voltage signal (i.e. origin signal) from the rotational position detecting surface 26 is to accurately and assuredly obtain one signal per revolution, by taking into account that the output voltage varies somewhat in temperature because of the large resistant temperature coefficient of the magneto-resistive elements 20. In the conventional detector shown in Fig. 4, the length of the origin signal can be enlarged in proportion to the width of the groove 6 of the second rotor 2. That is, when the width of the groove 6 is two times that of the pitch of the teeth 5 of the first rotor 1, the length of the origin signal becomes two times the period of the signal obtained from the first rotor 1. In the revolution detector 10 shown in Figs. 1 and 2, according to the object of the present invention, i.e., to make the integral molding of the rotor 12 possible, the tooth 28 of the upper rotational position detecting surface 26 must be formed with the same tooth-dimensions in the same phase as those of one of the teeth 24 of the rotational speed detecting surface 22. Therefore, to increase the length of the origin signal, the distance between the magneto-resistive elements 20 in the second magnetic sensor 36 may be widened, as aforementioned. In this embodiment, if the space between the magneto-resistive elements 20 in the second magnetic sensor 36 is 1/2 p, the output voltage pulse shown in Fig. 3c is obtained. As shown in the figure, the period T' of the waveform shown in Fig. 3c is 3/4 of the period T shown in Fig. 3b.

### LIST OF REFERENCE NUMERALS

- 10: magneto-resistive revolution detector
- 12: rotor
- 14, 16: permanent magnet
- 18, 20: magneto-resistive element
- 22: rotational speed detecting surface
- 24, 28: tooth
- 26: rotational position detecting surface
- 30: operational shaft
- 32: cylindrical hole
- 34: first magnetic sensor
- 36: second magnetic sensor
- 42: Vₒᵤₜ terminal

## Claims

1. A magneto-resistive revolution detector for detecting a rotational speed of a revolution body and a rotational position thereof in relation to a predetermined base point, comprising:
a rotor mounted on and rotatable with a revolution body to be detected, said rotor being an integrally molded element formed by sintering a magnetic material and having two coaxial circumferential surfaces with different surface shapes, one of said circumferential surfaces forming a rotational speed detecting surface having a plurality of teeth with predetermined tooth-dimensions and the other forming a rotational position detecting surface having one tooth with the same tooth-dimensions in the same phase as those of one of said teeth;
magnets fixedly arranged opposite to said rotational speed detecting surface and said rotational position detecting surface of said rotor, respectively, so as to form a variable magnetic field between said magnets and said rotor; and
signal generating magneto-resistive type circuit elements arranged between said rotor and each of said magnets so as to generate a rotational speed detecting signal and a rotational position detecting signal corresponding to a variation of said magnetic field following a revolution of said rotor.

2. A magneto-resistive revolution detector as claimed in claim 1, wherein each of said signal generating magneto-resistive type circuit elements comprises a pair of magneto-resistive elements, said pair of magneto-resistive elements arranged opposite to said rotational speed detecting surface of said rotor are disposed parallel to each other and connected in series in such a manner that they are spaced in a circumferential direction a distance of half a pitch of said teeth on said rotational speed detecting surface, and said pair of magneto-resistive elements arranged opposite to said rotational position detecting surface of said rotor are disposed parallel to each other and connected in series in such a manner that they are spaced in a circumferential direction a distance equal to a pitch of said teeth on said rotational speed detecting surface.

3. A magneto-resistive revolution detector as claimed in claim 1, wherein said rotor is an annular element having a cylindrical hole at a center thereof for mounting said rotor on the revolution body, and said rotational speed detecting surface and said rotational position detecting surface of said rotor are formed coaxially to said cylindrical hole.
